# EUROPEAN PATENT SPECIFICATION

(11) **EP 2 256 089 B1**
(45) Date of publication and mention of the grant of the patent: **20.08.2014**
(21) Application number: 10250972.6
(22) Date of filing: 25.05.2010
(51) Int. Cl.: C02F 1/46, C02F 1/461

(54) **A water treatment device**
Wasserbehandlungsvorrichtung
Dispositif de traitement des eaux

(30) Priority: 30.05.2009 GB 0909332
(43) Date of publication of application: 01.12.2010
(73) Proprietor: Scalemaster Limited, Stone, Staffordshire ST15 0SR (GB)
(72) Inventor: Jasper, Carl, Stone Staffordshire ST15 0SR (GB); Morgan, Glyn, Stone Staffordshire ST15 0SR (GB)
(74) Representative: Parnham, Kevin

(56) References cited:
- WO-A1-2006/004539
- GB-A- 2 279 663
- GB-A- 2 285 441
- JP-A- 2004 290 949
- US-B1- 6 287 450

## Description

The present invention relates to a water treatment device and more particularly a water treatment device which utilises a galvanic relationship between dissimilar metals to preferentially dissolve a particular metal into water to inhibit limescale precipitation from the water downstream of the device, and particularly when the water is heated.

In order to maintain the energy efficiency and extend the operational life of water heating appliances it is necessary to inhibit limescale precipitation. Prior UK patent GB9318383 describes a method and device for the treatment and conditioning of water to reduce limescale precipitation when the water is heated. It will be appreciated that the ratio between the more noble elements and the less noble elements in terms of surface area are determinant with regard to the efficiency of dissolution of the metal and simultaneous conversion of dissolved oxygen in the water to hydroxide.. Typically solid core elements of less noble material are utilised surrounded by a more noble component providing a multitude of passages for a water flow. Generally being a galvanic process there is sacrificial corrosion of one or other of the components and in such circumstances provision of solid elements does not allow tuning of the sacrificial corrosion process or presentation of the components for best effect with regard to the water flow.

GB 2285441, WO 2006 004539 and JP 2004 290949 show further known water treatment devices of the type as in the present application.

In accordance with aspects of the present invention there is provided a water treatment device as claimed in claim 1 below.

Typically, the hollow formed structure comprises pressed parts reciprocally formed to form a passage between them. Alternatively, the hollow formed structure comprises pressed parts reciprocally formed to form a closed box structure. Typically, the parts include interlocking elements to interfere with each other to form the hollow formed structure.

Alternatively, the hollow formed structure comprises a tube, that may be extruded, rolled or otherwise formed.

Generally, the housing is formed from a more noble material than that from which the hollow formed structure is formed. Alternatively, the housing is made from a plastics material.

Typically the water flow in use is in contact with the housing.

Generally, the multiple passage component and the hollow formed structure are beside each other.

Generally, the housing contacts at least one of the multiple passage component and/or the hollow formed structure and the water flowing through the device.

Possibly, the strands have a non circular cross section. Generally, the strands have a circular, flattened or oval cross section.

Typically, the hollow formed structure has open ends and encapsulates the multiple passage component. Alternatively, the hollow formed structure retains and engages the multiple passage component against the housing.

Possibly, the multiple passage component and the hollow formed structure comprise only a part of a cross-section of the housing whereby the flow of water is only part of a total flow of water through the housing in use. Generally, the multiple passage component and the hollow formed structure are presented centrally within the housing.

Typically, the less noble part of the hollow formed structure has a surface area compared to more noble part(s) of the multiple passage component, and where appropriate, the housing in a ratio of at least 1:1. Generally, the ratio is 1:3 or preferably more.

Typically, the more noble parts of the device are formed from copper. Possibly, the less noble parts of the structure are formed from zinc or from other metals. Possibly, more than one metal may be used within the same device. The zinc may be an alloy which contains elements that aid in promoting or maintaining the galvanic dissolution process. Generally the zinc is commercially pure zinc to grade Z1 complying with standard EN 1179:2003 (Zinc and zinc alloys - Primary zinc).

Generally, the housing is formed from copper with end caps to retain the multiple passage component and the hollow formed structure with apertures for water flow in use. Possibly, the housing may be formed from other metals. The housing may be formed from a plastics material. Generally, the end caps present the multiple passage component and the hollow formed structure within the water treatment device.

Possibly, the hollow formed structure has a rectangular cross section.

Possibly, the hollow formed structure has slots and/or apertures in side portions. Possibly, the slots and/or apertures are perpendicular to the multiple passage component in terms of direction of water flow in use.

Possibly, the hollow formed structure has surface features to engage and retain position relative to the multiple passage component and/or the housing. Possibly, the hollow formed structure incorporates surface features to facilitate flow turbulence and direction within the water treatment device. Possibly, the hollow formed structure incorporates surface features for preferential corrosion relative to the remainder of the hollow formed structure. Possibly, the surface features are removable or replaceable.

An embodiment of aspects of the present invention will now be described by way of example with reference to the accompanying drawings in which:
Figure 1 is a schematic cross section of a water treatment device in accordance with aspects of the present invention;
Figure 2 is an exploded side view of a multiple passage component and hollow formed structure parts in an exploded view prior to assembly;
Figure 3 is an end view of the components as depicted in figure 2;
Figure 4 is a side view of the components as depicted in figure 2 and figure 3 in an assembled state;
Figure 5 is an end view of the components as assembled in figure 4;
Figure 6 is a schematic cross-section of an alternative water treatment device not being part of the present invention; and
Figure 7 is a schematic perspective view of a multiple passage component and hollow formed structure assembly (not being part of the present invention).

As indicated above the anodic dissolution of zinc and the resulting passage into the water of zinc ions, and/or zinc hydroxide and zinc oxide particles, with concurrent cathodic reduction of dissolved oxygen to hydroxide at the more noble component provides significant benefits with respect to the inhibition of limescale precipitation on waterside surfaces downstream of the device and particularly when the water is heated. It will be understood that with the single pass of water through a water treatment device the sacrificial effects of the components of a water treatment device will be beneficial where water is treated prior to heating. Generally the water treatment device will be located within the cold mains feed pipework to premises typically just after the stop-cock at the point of entry or in the cold mains supply pipework just before a water heating appliance. Typically the device will be left in the pipework and will be replaced when required such as upon installation of a new boiler or routine maintenance. The effects of the water treated in this way persist for relatively long periods of time and are beneficial where the water is stored prior to heating.

The galvanic processes depend upon a voltage difference (potential difference) and resulting galvanic current between different materials within the water treatment device. These processes relate to the electro-chemical nature of the component materials and generally can be considered as more noble and less noble element materials. Traditionally copper and zinc have been utilised in order to provide the galvanic effect. A multiple passage component in the form of a copper web formed from convoluted strands of material is provided as the cheapest way of exposing a large surface area to a water flow. Alternatives would be a specifically extruded honeycomb or mesh-gauze type structure but this would add greatly to cost. The less noble parts previously are typically formed from zinc sheet, zinc cast as a block, or zinc extruded in integral form to reduce costs but limiting configuration of alternatives with respect to operation of the water treatment device. It will be understood that a cast component is limited in the surface area of the component available for contact with the water flow whilst sheet and extruded tubular forms may not maximise available surface area. Aspects of the present invention retain the galvanic effects of material differentials in components of a water treatment device but provide enhanced performance at reduced cost through use of less material by provision of a hollow formed structure comprising two or more components interlocked or inter-associated to create the hollow formed structure.

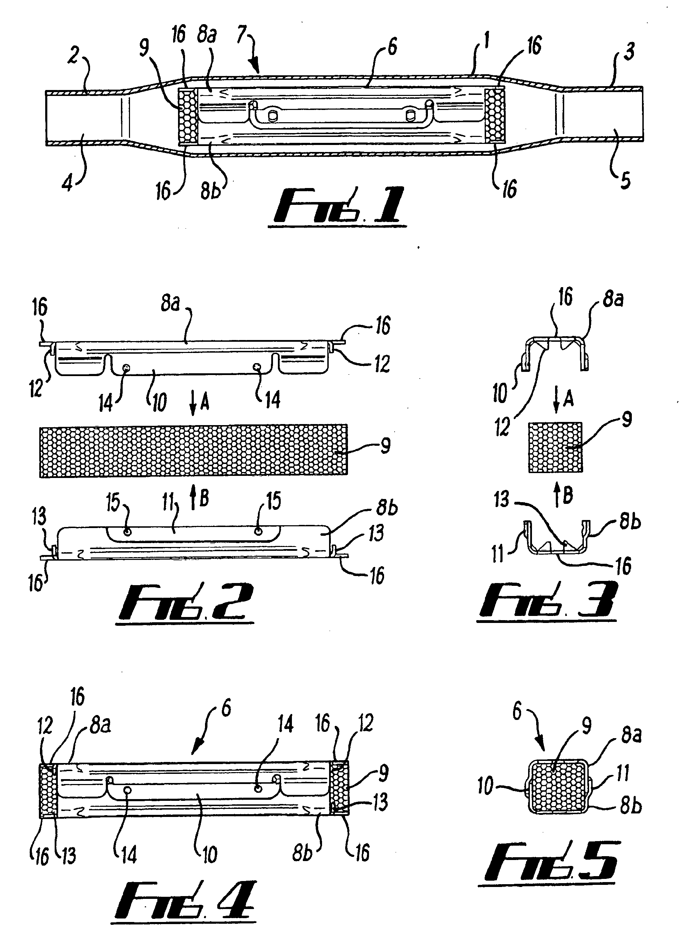

Figure 1 provides a schematic cross section of a water treatment device 7 in accordance with aspects of the present invention. An outer housing or casing 1 generally comprises a cylindrical section for consistency with cylindrical end portions 2, 3 to enable the device to be secured to flow pipes (not shown). The housing 1 may be formed from a plastics material or any suitable material including metals provided a robust structure is created through which water can flow from one end to the other. The ends 2, 3 in such circumstances provide apertures 4, 5 through which water can flow in use. Within the housing 1 a galvanic electrode capsule or combination 6 is provided to provide water treatment in accordance with aspects of the present invention. In such circumstances the water treatment device 7 in accordance with aspects of the present invention can be secured through appropriate connectors including screw thread, compression and solder association with a pipe supplying cold mains water in a domestic or industrial environment. The galvanic electrode capsule 6 in the embodiment depicted in figure 1 provides water treatment and as illustrated is generally centrally located by an appropriate manner within the housing 1. It may be that end caps including the ends 2, 3 are removable to allow access to the capsule or combination 6 for removal and replacement or simple initial assembly. These end 2, 3 caps may be secured by an appropriate weld or screw thread association (not shown).

In a preferred embodiment of aspects of the present invention as depicted in figure 1 a hollow formed structure 8 is provided comprising parts 8a, 8b associated together to provide a hollow cross section within which a multiple passage component 9 is secured and located. The multiple passage component 9 generally comprises a web or assembly of convoluted wires to provide a large contact area with a water flow in use. In the preferred embodiment the hollow formed structure 8 comprises pressings of a suitable material associated together through interlock edges or other features to create the hollow structure 8. Generally, the hollow formed structure 8 will be formed from zinc or a zinc alloy whilst the multiple passage component 9 will be formed from copper in order to achieve the relative noble element differentials necessary for galvanic action to remove oxygen from and add zinc to a water flow through a device 7 in use. Typically, the different materials will be electrically connected.

By utilising components 8a, 8b it will be appreciated that the multiple passage component 9 may be held robustly under slight compression and will be in intimate electrical contact. It will also be understood that features may be provided within the parts 8a, 8b which retain the multiple passage component 9 in position. These features may include inwardly extending teeth or other features to retain the multiple passage component 9 in use.

Generally, the combination 6 of the hollow formed structure 8 and multiple passage component 9 will provide only a proportion of the cross section of the device, that is to say the housing 1 in use. In such circumstances a proportion of the total water flow through the device 7 may bypass the galvanic electrode combination or capsule 6 to either side but the surface area of the hollow formed component 8 is exposed to that flow on both sides.

It will be understood that the hollow formed structure 8 may comprise two or more elements with slots or apertures in side portions extending radially or perpendicularly away from the multiple passage component 9. In such circumstances water flow through the device 9 may pass directly along the full length of the multiple passage component 9 or radiate outwardly for mixing and turbulent effects, which will assist in improving the galvanic function and the efficiency of the anodic and cathodic processes. It will also be understood that features within the surface of the parts 8a, 8b forming the hollow formed structure 8 by themselves generate turbulence.

Figure 2 and figure 3 illustrate respectively side and end views of an exploded depiction of the hollow formed structure 8 and multiple passage component 9 prior to assembly. It will be understood in assembly the parts 8a, 8b will be moved in the direction of arrowheads A, B towards the multiple passage component 9. The multiple passage component 9 as indicated above will generally comprise a "wool" or combination of convoluted strands assembled together to provide multiple passages from one end to the other. The strands may be circular, or non circular in the form of flattened or oval strands in order to adjust the surface area of available to the flow. As will be indicated later the respective ratio of surface area between the hollow formed structure 8 and the multiple passage component 9 is important in terms of achieving galvanic ratios for deoxidation and zinc dosing of a water flow through the water treatment device in accordance with aspects of the present invention.

It will be noted that interference features 10, 11 are provided in respective parts 8a, 8b. These interference features or parts 10, 11 oppose each other upon assembly of the hollow formed structure 8 in order to constrain and present the multiple passage component 9. Furthermore, retention features 12, 13 are provided to inhibit slide or slip of the multiple passage component 9 from the embrace of the hollow formed structure 8 under water flow pressure it will be appreciated that due to the nature of a multiple passage flow through the component 9 there may be a significant flow drag effect upon the component 9 urging it from association with the hollow formed structure 8. The interference tabs or features 12, 13 resist this movement by grip and penetrative engagement with the component 9 in use as will be described later with regard to figure 4 and figure 5. In certain embodiments the multiple passage component may extend beyond the ends of the hollow formed structure and contact or engage with or within the ends of the housing. This helps to retain the multiple passage component and the hollow formed structure in position within the housing.

As indicated above the multiple passage component 9 is held under a slight compression. The respective engagement of interference parts 10, 11 may include detents 14, 15 to effect a degree of retention between the parts 8a, 8b but of a generally marginal nature. Retention of the parts 8a, 8b in a hollow formed structure will be through close association within the housing 1 (figure 1) and any positioning lugs or mechanisms within that housing 1 for the galvanic electrode capsule or combination 6 (figure 1) in use.

It will be noted that tabs 16 on the ends of the hollow formed structure are provided in respective parts 8a, 8b. In embodiments where these are provided, they ensure that there is always an opening between the parts 8a and 8b and the end of the housing so as to allow water to flow between the parts 8a and 8b and the housing in addition to through the multiple passage component 9 in the hollow formed structure within the device. In embodiments where the multiple passage component 9 extends beyond the ends of the hollow formed structure, the tabs 16 are not needed.

Figure 4 and figure 5 illustrate the components in the form of the hollow formed structure parts 8a, 8b and multiple passage component 9 as depicted in figure 2 and figure 3 in an assembled state. Thus, a galvanic electrode capsule or combination 6 (figure 1) is provided and this is the state that the components 8a, 8b, 9 will be presented within a water treatment device 7 (figure 1) in accordance with aspects of the present invention. As can be seen the interference elements 10, 11 engage each other with detents provided by the pimple and indent features 14, 15 to retain marginal association between the parts 8a, 8b to form the hollow formed structure 8 within which the multiple passage component 9 is located. Generally, the hollow formed structure is made from a zinc or zinc alloy. Where zinc is used this is commonly referred to as grade Z1 in accordance with the standard EN 1179:2003 (Zinc and zinc alloys - Primary zinc). Care must be taken with regard to the zinc, or zinc used for the production of the zinc alloy, in that it should be a pure grade of zinc as the ability of the zinc to dissolve in water can be severely impaired where there are certain impurities. Any suitable zinc alloy can be used which contains elements that aid in promoting or maintaining the galvanic dissolution process. General sheet zinc and zinc alloys tend to be alloyed with additions of other metals to help the material form a protective patina in water and oxygenated conditions which render the material unsuitable as a sacrificial anode. Care must be taken with regard to the zinc alloy used as the components or parts 8a, 8b will generally be formed by a pressing process and therefore must be suitably ductile and malleable to allow such pressing processes to occur. General cast zinc alloys tend to be of a more brittle nature and may not be suitable for press forming in accordance with aspects of the present invention.

As indicated above the multiple passage component 9 may be held under a slight compression to retain association within the hollow formed structure otherwise the assembly of the capsule or combination 6 will be installed within the housing 1 (figure 1) in total in order to form a water treatment device 7 in accordance with aspects of the present invention.

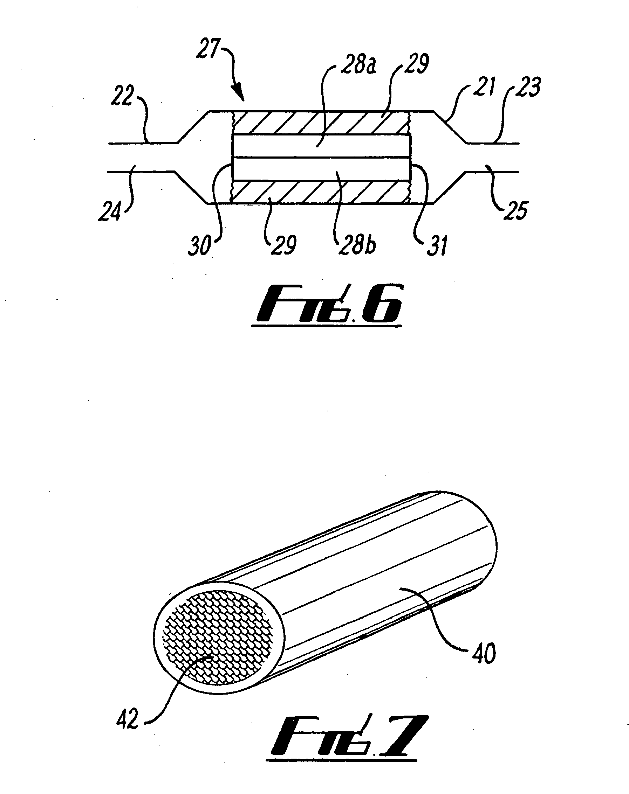

As indicated above subject to surface area ratios as described later it is the galvanic relationship between the materials from which the components in the formed parts 8a, 8b and the multiple passage component 9 which is important. In such circumstances as depicted schematically in figure 6 an alternative water treatment device 27 can be constructed from a housing 21 with ends 22, 23 having apertures or openings 24, 25 through which a water flow in use passes. This device 27 does not form part of the present invention. Within the housing 1 a hollow formed structure 28 is provided comprising parts 28a, 28b. Between the hollow formed structure 28 and the housing 21 a multiple passage component 29 is provided. In such circumstances it will be understood that a water flow between the ends 22, 23 will pass through the hollow formed structure 28 and the multiple passage components 29. In such circumstances galvanic effects will be provided to the water flow in order to remove oxygen and dissolve zinc as described above provided the respective parts 28a, 28b or at least portions or parts of these components and the multiple passage component 29 have a respective noble element differential. As indicated previously typically the hollow formed structure 28 will be formed from zinc or a zinc alloy whilst the multiple passage component 29 will be formed from copper.

By forming the hollow formed structure 28 from respective parts typically through a pressing process it will be understood that not only greater control of the surface area available to the water flow can be achieved but also structural enhancement and location within the device 27. Thus, the multiple passage component 29 will be held under slight compression which may be beneficial as this component 29 will generally be formed from strandular material of a relatively spongy nature and so retention within the device 27 may be difficult. The parts 28a, 28b may include surface features to engage by penetration or otherwise with the multiple passage component 29 and also enhance flow characteristics through the device 27. As previously the internal hollow cavity of the hollow formed structure 28 includes a multiple passage component (not shown). In such circumstances respectively different multiple passage components can be provided in an outer part as depicted as component 29 in figure 6 in comparison with an alternative passage component located within the hollow formed structure 28. In such circumstances different galvanic effects in terms of differentials may be provided within the same water treatment device. Dependent upon operational conditions different dimensions and sized components 28a, 28b may be provided such that the degree of compression and retention therefore of the multiple passage component 29 adjusted. In such circumstances with a low flow rate and therefore pressure system less compression will be required upon the multiple passage component 29, and a more open expansive structure may be desirable which will be achieved by dimensioning of the hollow formed structure parts 28a, 28b whilst at higher pressures marginally larger parts 28a, 28b may be provided in order to increase the compression upon the component 29 and so retention/orientation in such circumstances whilst essentially maintaining the same respective surface area ratios.

As indicated above generally water flow will be allowed to pass through the hollow formed structures. However, it will also be understood that end parts 30, 31 may be boxed off at one or both ends to provide essentially a closed hollow formed structure or linger in a closed cavity whereby in such circumstances all water flow will pass through the multiple passage component 29 and only the outer surface parts of the hollow formed component 28 will be exposed to such water flow. Furthermore, the closed ends may be removed or retained to adjust available surface area. In such circumstances the proportioning of surface areas can again be adjusted dependent upon requirements. It will also be understood that one end, typically the downstream end 31 may have a different open cross sectional size for through flow in comparison with another end 30 whereby in such circumstances water may be forced outwardly through slots or apertures in the sides of the hollow formed structure 28 to enhance turbulence as well as potentially retention of the multiple passage component 29 in use. It will also be understood where appropriate a grid may be provided at one or both ends 30, 31 within the hollow formed structure in order to capture debris present within a water flow system or regulate flow.

Hollow formed structures are provided by pressed or otherwise formed parts which maximise the available surface area for the amount of material available and therefore allow greater specific control of the surface area ratios between the multiple passage component and the hollow formed structure in use giving a designer greater scope for adaptation for particular requirements. As indicated above generally the materials utilised to form respective components will be copper or zinc. The dimensions and configurations of these components will be chosen such that there is a surface area ratio between copper to zinc exposed to water in the order of preferably at least 2:1 and preferably around 3:1 or a higher ratio. However dependent upon operational requirements and whether other materials are utilised different ratios may be achieved. It will also be understood by sizing of the hollow formed component different compression ratios in terms of compaction of the convoluted wire typically utilised to form the multiple passage components can be adjusted dependent upon requirements. It may also be dependent upon flow rates that the hollow formed structure in terms of the parts forming that structure may be arranged to move radially to adjust the degree of compaction and therefore the degree of surface area exposure within the multiple passage component adjusting the ratio as required.

Figure 7 illustrates an alternative hollow formed structure 40 in the form of a tube, inside which is located a multiple passage component 42. This does not form part of the present invention. The tube 40 can be formed from a suitable material, such as zinc, by way of extrusion, rolling or any other known techniques.

The multiple passage component 42 may comprise wire, folded or scrunched and pressed into the hollow section of the tube 40 to be in electrical contact therewith. The wire may be copper wire or of any suitable material to enable this hollow formed structure 40 and multiple passage component 42 assembly to be used as a component of a water treatment device in accordance with the present invention.

In use of a device, the device is inserted in a cold mains water supply pipe to premises or the cold mains feed pipework to a water heating appliance. The water enters the device through an aperture as indicated and passes along through the multiple passage component in contact with that multiple passage component and the hollow formed structure at the same time before leaving through an outlet. It will be understood that water treatment devices in accordance with the present invention are particularly suitable for utilisation with mains water for immediate use and in applications where the water is heated.

Devices in accordance with the present invention generally operate as indicated as galvanic cells using cathodic reaction of the cell with the dissolved oxygen present in the water to produce hydroxide species at the interface between the water and the cathodic copper wire parts of the multiple passage component. Such hydroxide species have an effect in locally increasing pH which acts to promote the formation of calcium carbonate nuclei. Such nuclei have an effect in preventing the precipitation and deposition of limescale on downstream surfaces, particularly when the water is heated. Devices in accordance with the present invention generally operate as indicated as galvanic cells using anodic reaction of the cell with the water to produce dissolved zinc species at the interface between the water and the anodic zinc parts of the hollow formed structure. Such zinc species have an effect upon the dissolved calcium in the water. By forming a complex ion with the dissolved calcium in water the precipitation of limescale is inhibited, including when the water is heated. Treatment devices in accordance with the present invention will be self limiting in that once flow stops and the dissolved oxygen in the water has been consumed the cathodic and anodic reactions will abate. It will be appreciated that once the anodic element of the hollow formed structure has all dissolved into the water the mechanism will cease to operate. In such circumstances the device will need to be replaced to provide further treatment. Consequently the length of life of the treatment device is limited by the amount of zinc within the hollow formed structure.

The housing in accordance with the present invention may be formed from any suitable material to provide confinement of the water flow to the galvanic electrode combination or capsule 6 comprising the multiple passage component and the hollow formed structure. However, there are benefits with regard to employing an outer housing in the form of copper. Construction of the housing, with similar materials to that from which the multiple passage component is formed will have benefits in terms of the galvanic surface area ratios as described below as well as generally providing strength and rigidity for the treatment device in comparison with devices having a plastics material outer housing.

It will be understood that the inner surface of the housing is exposed to water flow through the treatment device. In such circumstances if the housing is formed from the same material as the multiple passage component the surface exposed to the water flow of the housing will contribute to surface area ratios. As described above there is a desired ratio between the surface areas of the copper, that is to say the multiple passage component and zinc that is to say the hollow formed structure in accordance with aspects of the present invention. By contributing to the surface area available it will be understood that a smaller dimensioned treatment device may be possible if the housing is formed from a suitable material such as copper in the example described above. Care must be taken with regard to other materials and in particular metals as these may provide additional galvanic actions which may be detrimental and affect the operational life of the device. In certain embodiments the housing may be formed wholly or generally of plastics material.

Modifications may be made to the present invention without departing from the essence of the invention that is being defined in claims 1-14. For example the cross sectional shape of the treatment device may be varied and the internal components may take different shapes or forms provided an appropriate water flow through the treatment device can be achieved. The multiple passage device can be defined by simply capability for water permeability or having a porous form in order to maximise the exposed surface area of that component relative to that of the hollow formed structure for galvanic interaction.

Typically, the hollow formed structure will have a rectilinear form to ease press forming of the respective parts of the structure. The multiple passage component is located within the parts of the hollow formed structure. In certain embodiments the multiple passage component may extend beyond the ends of the hollow formed component to engage against the inside of the housing, to help retain the multiple passage component and the hollow formed structure in position within the housing. The angular projections of rectilinear cross section in such circumstances may facilitate engagement with the multiple passage flow component.

Advantageously the hollow formed structure will be presented in such a way that water flows on both sides of the structure resulting in a potentially reduced component size enabling the surface area necessary for galvanic effect to be achieved by a combination of both inner and outer surfaces of the hollow formed structure exposed to the water flow in use.

As indicated above it is the galvanic effect which is utilised for dissolution of zinc and oxygen removal in accordance with aspects of the present invention. Zinc is the preferred material for utilisation as the anode in comparison with the cathode provided by the copper of the multiple passage component. However alternative materials include metals or alloys less noble than the multi passage component. It will be understood that all of the hollow formed structure or merely a part of that structure may be utilised as the anode in the galvanic relationship utilised in accordance with aspects of the present invention. Thus perforated or granulated zinc, zinc swarf or other size reduced forms of zinc or other anodic material which can be suitably retained in position may be associated with the hollow formed structure to provide the galvanic effects in accordance with aspects of the present invention.

The more noble material to provide the cathodic element of the galvanic interaction as indicated may comprise copper as this can be readily formed into the multiple passage component in accordance with aspects of the present invention. However, the cathodic component may also be provided for example by carbon or glassy carbon. In principal any elements positioned higher in the electrochemical series by sufficient distance to generate a potential difference of about 0.2 volts or more between them and the less noble material used for the anode may be utilised but the materials must not be such that they will contaminate the water itself. As indicated above the multiple passage component can be essentially considered a water permeable body. In the preferred embodiment described above this body is created by convoluted wire. The convoluted wire may be a single length of wire deformed to a convoluted shape or multiple wire elements similarly deformed in order to create the multiple passage component. The multiple passage component may be self supporting in that it can be inserted as an element in association with the hollow formed structure. Alternatively, the multiple passage component may comprise a number of loose elements which as indicated may be suitably retained within the housing.

Utilisation of zinc in the galvanic effect may have benefits with regard to the health benefits of the water. Such elements within the water may increase the acceptability of the water as consumption of small quantities of zinc is considered beneficial to human health.

Generally the anode and cathode portions of the respective multiple passage component and the hollow formed structure in accordance with the present invention are preferably in intimate simultaneous surface to surface contact with the water flow. Such a relationship is particularly important where the flow rate of water through the water treatment device varies or is relatively high as in the case of some domestic water supplies. Where flow rates are higher components in accordance with aspects of the present invention need to be in intimate surface to surface contact with one another to ensure effective reduction of oxygen and dissolution of zinc. At higher velocities of flow, local acceleration and turbulence of the water is caused during its passage through the convolutions of the multiple passage component to achieve sufficient contact of the water with the surface of the zinc to achieve sufficient dissolution to inhibit limescale precipitation when the water is heated.

As indicated above relative surface areas between the cathodic and anodic combinations to provide the galvanic effects in accordance with the present invention can be adjusted. It is generally desirable in applications where inhibition of limescale precipitation is the primary objective to maximise the cathodic surface area, to maximise galvanic current between the cathode and anode and to achieve sufficient dissolution of the anode material. In such circumstances variation in the relative surface areas between the cathodic (copper) and anodic (zinc) is possible in order to improve performance of the treatment device . By providing a hollow formed structure comprising parts which are press formed or otherwise fabricated it will be understood that designer objectives with regard to limescale inhibition can be more readily accommodated. Aspects of the present invention provide an extremely simple, compact and effective means of controlling limescale precipitation on downstream surfaces and within a water heating appliance. The use of a water permeable body of convoluted wire or other form as the multiple passage flow component enables more of the noble element to be presented within the treatment device. Such an approach enables high surface areas of both anodic and cathodic components to be exposed to water flowing through the treatment device within a relatively small confined space. Such surface area availability can also be increased by forming the housing from a more noble element and by ensuring that water flow is exposed to both sides of the anodic component in addition to the multiple passage component.

Generally the hollow formed component in accordance with the present invention will be formed from a flat plate material. Alternatively, the hollow formed structure may be formed from components having different thicknesses and surface undulations in order to alter the surface area available for galvanic action as well as turbulence within the treatment device.

## Claims

1. A water treatment device comprising a housing to accommodate a multiple passage component for water flow and a hollow formed structure in intimate electrical contact with the multiple passage component formed of a web of entwined strands or convoluted wire, the hollow formed structure at least in part formed from a less noble material compared to the multiple passage component, the housing arranged to present in use a flow of water in contact with both the multiple passage component and the part of the hollow formed structure of a less noble element, the hollow formed structure comprising two separate reciprocally formed parts pressed together in the housing to form a hollow cross-section with the multiple passage component compressed between the pressed parts into the hollow cross-section.

2. A water treatment device as claimed in claim 1, **characterised in that** the hollow formed structure defines a passage therethrough.

3. A water treatment device as claimed in claim 1 or claim 2, **characterised in that** the hollow formed structure comprises pressed parts reciprocally formed to form the passage between them.

4. A water treatment device as claimed in any preceding claim, **characterised in that** the housing is formed from a more noble material than that of which the hollow formed structure is formed.

5. A water treatment device as claimed in any preceding claim, **characterised in that** the housing is made from a plastics material.

6. A water treatment device as claimed in any preceding claim, **characterised in that** the multiple passage component and the hollow formed structure are beside each other.

7. A water treatment device as claimed in any preceding claim, **characterised in that** the housing contacts at least one of the multiple passage component and/or the hollow formed structure and the water flowing through the device.

8. A water treatment device as claimed in any proceeding claim, **characterised in that** the hollow formed structure has open ends and encapsulates the multiple passage component.

9. A water treatment device as claimed in any preceding claim, **characterised in that** the less noble part of the hollow formed structure has a surface area compared to more noble part(s) of the multiple passage component and where appropriate the housing in a ratio of at least 1:1.

10. A water treatment device as claimed in any preceding claim, **characterised in**
**that** the more noble part(s) of the device are formed from copper.

11. A water treatment device as claimed in any preceding claim, **characterised in that** the less noble parts of the structure are formed from zinc.

12. A water treatment device as claimed in claim 12, **characterised in that** the zinc is commercially pure zinc to grade Z1 complying with standard EN 1179:2003 (Zinc and zinc alloys - Primary zinc).

13. A water treatment device as claimed in any preceding claim, **characterised in that** the hollow formed structure has surface features to engage and retain position relative to the multiple passage component and/or the housing.

14. A water treatment device as claimed in any preceding claim, **characterised in that** the hollow formed structure incorporates surface features to facilitate flow turbulence and direction within the water treatment device.

## Patentansprüche

1. Wasserbehandlungsvorrichtung mit einem Gehäuse zur Aufnahme eines Mehrfachdurchgang-Komponente für Wasserdurchfluss und eine Hohlstruktur gebildet in engem elektrischen Kontakt mit der von einem Netz von verschlungenen Stränge oder gewundenen Draht gebildet mehreren Durchgang Komponente, die Hohl gebildeten Struktur zumindest teilweise aus einem weniger edlen Material gebildet, verglichen mit der Mehrfachdurchgang Komponente angeordnet, dass das Gehäuse im Gebrauch einen Wasserstrom in Kontakt mit sowohl der Mehrkanalbauteil und dem Teil der Hohlstruktur gebildet aus einem weniger edlen Element vorhanden, das hohle Struktur gebildet, bestehend aus zwei wechselseitig getrennte Formteile zusammen in das Gehäuse gedrückt einen hohlen Querschnitt mit Mehrfachdurchgang-Komponente zwischen den Pressteilen zusammengedrückt in den Hohlquerschnitt bilden.

2. Wasserbehandlungsvorrichtung nach Anspruch 1, **dadurch gekennzeichnet, dass** der Hohlstruktur ausgebildet ist definiert einen Durchgang.

3. Wasserbehandlungsvorrichtung nach Anspruch 1 oder Anspruch 2, **dadurch gekennzeichnet, dass** der Hohlstruktur ausgebildet Pressteile wechselseitig ausgebildet, den Durchgang zwischen ihnen zu bilden.

4. Wasserbehandlungsvorrichtung nach einem der vorhergehenden Ansprüche, **dadurch gekennzeichnet, daß** das Gehäuse aus einem edleren Material als dem der Hohlstruktur gebildet wird, gebildet.

5. Wasserbehandlungsvorrichtung nach einem der vorhergehenden Ansprüche, **dadurch gekennzeichnet, daß** das Gehäuse aus einem Kunststoffmaterial hergestellt ist.

6. Wasserbehandlungsvorrichtung nach einem der vorhergehenden Ansprüche, **dadurch gekennzeichnet, dass** die Mehrfachdurchgangs-Komponente und der Hohlstruktur ausgebildet sind nebeneinander.

7. Wasserbehandlungsvorrichtung nach einem der vorhergehenden Ansprüche, **dadurch gekennzeichnet, daß** die Gehäusekontakte zumindest eine der Mehrfachdurchgang-Komponente und / oder der Hohlstruktur gebildet wird und das Wasser durch die Vorrichtung fließt.

8. Wasserbehandlungsvorrichtung nach einem der vorhergehenden Ansprüche, **dadurch gekennzeichnet, dass** der Hohlstruktur gebildet hat offene Enden und kapselt die mehreren Passage-Komponente.

9. Wasserbehandlungsvorrichtung nach einem der vorhergehenden Ansprüche, **dadurch gekennzeichnet, daß** das unedlere Teil der Hohlstruktur gebildet hat eine Oberfläche im Vergleich zu edleren Teil (e) der Mehrfachdurchgang-Komponente und gegebenenfalls das Gehäuse im Verhältnis von mindestens 1:1.

10. Wasserbehandlungsvorrichtung nach einem der vorhergehenden Ansprüche, **dadurch gekennzeichnet, daß** das edlere Teil (e) der Vorrichtung sind aus Kupfer gebildet ist.

11. Wasserbehandlungsvorrichtung nach einem der vorhergehenden Ansprüche, **dadurch gekennzeichnet, daß** das unedlere Teile der Struktur aus Zink gebildet ist.

12. Ein Wasserbehandlungsgerät nach Anspruch 12, **dadurch gekennzeichnet, dass** das Zink ist kommerziell reinem Zink auf Grad Z1 gemäß der Norm EN 1179:2003 (Zink und Zinklegierungen - Primär Zink).

13. Wasserbehandlungsvorrichtung nach einem der vorhergehenden Ansprüche, **dadurch gekennzeichnet, dass** der Hohlstruktur ausgebildet ist, um die Oberflächenmerkmale der Mehrfachdurchgang-Komponente und / oder des Gehäuses eingreifen und behalten Position relativ.

14. Wasserbehandlungsvorrichtung nach einem der vorhergehenden Ansprüche, **dadurch gekennzeichnet, dass** der Hohlstruktur gebildet beinhaltet Oberflächenmerkmale zu Turbulenzen und Strömungsrichtung in der Wasserbehandlungsvorrichtung zu erleichtern.

## Revendications

1. Dispositif de traitement de l'eau comprenant un boîtier pour recevoir un composant à canaux multiples pour l'écoulement de l'eau et une structure formée creux en contact électrique intime avec le composant à canaux multiples formée d'une nappe de fils entrelacés ou fil convolutée, la structure formée creux au moins en partie formée à partir d'un matériau moins noble par rapport au passage multiple composant, le logement agencé de manière à présenter en utilisation, un écoulement d'eau en contact à la fois avec le composant à canaux multiples et la partie de la structure creuse formée d'un élément le moins noble, la structure formée creux comprenant deux parties mutuellement formées séparées pressé ensemble dans le boîtier pour former une section creuse avec le composant à canaux multiples comprimé entre les parties pressées dans la section transversale creuse.

2. Dispositif de traitement de l'eau selon la revendication 1, **caractérisé en ce que** la structure formée creux définit un passage à travers lui.

3. Dispositif de traitement de l'eau selon la revendication 1 ou la revendication 2, **caractérisé en ce que** la structure creuse formée comprend des parties pressées formées réciproquement pour former le passage entre eux.

4. Dispositif de traitement de l'eau selon l'une quelconque des revendications précédentes, **caractérisé en ce que** le boîtier est formé à partir d'un matériau plus noble que celui dont la structure formée creux est formé.

5. Dispositif de traitement de l'eau selon l'une quelconque des revendications précédentes, **caractérisé en ce que** le boîtier est fabriqué à partir d'une matière plastique.

6. Dispositif de traitement de l'eau selon l'une quelconque des revendications précédentes, **caractérisé en ce que** le composant de passage multiple et la structure formée creux sont à côté de l'autre.

7. Dispositif de traitement de l'eau selon l'une quelconque des revendications précédentes, **caractérisé en ce que** les contacts d'au moins une de la composante de passage multiple et / ou la structure du creux formé et de l'eau s'écoulant à travers le dispositif de logement.

8. Dispositif de traitement de l'eau selon l'une quelconque des revendications précédentes, **caractérisé en ce que** la structure formée creux a des extrémités ouvertes et encapsule le composant à canaux multiples.

9. Dispositif de traitement de l'eau selon l'une quelconque des revendications précédentes, **caractérisé en ce que** la partie la moins noble de la structure creuse formée a une aire de surface par rapport à la plus part noble (s) du composant de passage multiple et le cas échéant le boîtier dans un rapport d'au moins 1:1.

10. Dispositif de traitement de l'eau selon l'une quelconque des revendications précédentes, **caractérisé en ce que** la partie la plus noble (s) du dispositif sont formées à partir de cuivre.

11. Dispositif de traitement de l'eau selon l'une quelconque des revendications précédentes, **caractérisé en ce que** les parties les moins nobles de la structure sont formés à partir de zinc.

12. Dispositif de traitement de l'eau selon la revendication 12, **caractérisé en ce que** le zinc est du zinc de pureté commerciale de qualité Z1 conforme à la norme EN 1179:2003 (zinc et alliages de zinc - zinc primaire).

13. Dispositif de traitement de l'eau selon l'une quelconque des revendications précédentes, **caractérisé en ce que** la structure formée creux présente des caractéristiques de surface pour engager et retenir la position par rapport au composant de passage multiple et / ou le boîtier.

14. Dispositif de traitement de l'eau selon l'une quelconque des revendications précédentes, **caractérisé en ce que** la structure creuse formée incorpore des caractéristiques de surface afin de faciliter l'écoulement et la direction de turbulence à l'intérieur du dispositif de traitement de l'eau.
